# EUROPEAN PATENT APPLICATION

(11) **EP 3 822 111 A1**
(43) Date of publication of application: **19.05.2021**
(21) Application number: 19208952.2
(22) Date of filing: 13.11.2019
(51) Int. Cl.: B60L 53/36

(54) **A METHOD FOR POSITIONING A VEHICLE PAD AND A BASE PAD RELATIVE TO EACH OTHER**

(71) Applicant: Ningbo Geely Automobile Research & Development Co., Ltd., Ningbo, Zhejiang 315336 (CN)
(72) Inventor: SAMUELSSON, Gabriel, 441 96 Alingsås (SE); WALDEJER, Alexander, 415 04 Göteborg (SE)
(74) Representative: Zacco Sweden AB

(57) **Abstract**

The invention relates to a method for positioning a vehicle pad (14) arranged on a vehicle (1), and a base pad (12) of a wireless power transfer (WPT) system for charging vehicles, relative to each other, by driving the vehicle (1) to the base pad (12). The method comprising the steps of detecting the base pad (12) by one or more parking sensors (22) of the vehicle when the vehicle approaches the base pad, and, when the base pad has been detected, controlling the speed of the vehicle (1) to a predetermined initial alignment speed (AS).

## Description

### TECHNICAL FIELD

The invention relates to a method for positioning a vehicle pad arranged on a vehicle, and a base pad of a wireless power transfer (WPT) system for charging vehicles, relative to each other. The invention further relates to a control unit for controlling a vehicle.

### BACKGROUND

Electric vehicles and plug in hybrid vehicles can be charged wirelessly through induction coils. Usually a first coil of a transmitter is arranged in a base pad on the floor or the ground, and a second coil of a receiver is arranged at the underside of the vehicle in a vehicle pad.

The charging operation requires relatively accurate alignment between the vehicle pad and the base pad for ensuring an efficient and safe power transfer. Manual alignment of the vehicle pad and the base pad relative to each other by manoeuvring the vehicle can be difficult and inconvenient for the driver of the vehicle.

### SUMMARY

An objective of the invention is to provide a method for positioning a vehicle pad arranged on a vehicle, and a base pad of a wireless power transfer (WPT) system for charging vehicles, relative to each other, which method can be used for facilitating wireless charging of vehicles.

The objective is achieved by a method for positioning a vehicle pad arranged on a vehicle, and a base pad of a wireless power transfer (WPT) system for charging vehicles, relative to each other, by driving the vehicle to the base pad, which method comprises the steps of detecting the base pad by one or more parking sensors of the vehicle when the vehicle approaches the base pad, and, when the base pad has been detected, controlling the speed of the vehicle to a predetermined initial alignment speed.

The invention is based on the insight that by such a method, the alignment can be started when the vehicle (vehicle pad) is at a relatively long distance from the base pad. By the use of the parking sensors, the position of the base pad can be detected before there is any usable electromagnetic coupling between the vehicle pad and the base pad, and the speed of the vehicle can be automatically adapted to the remaining distance between the vehicle (vehicle pad) and the base pad for facilitating the alignment operation. Such autonomous alignment will facilitate the charging operation of the vehicle.

By the predetermined initial alignment speed is meant a speed used when the base pad has been detected by said one or more parking sensors, for example as soon as the base pad has been detected, and alignment between the vehicle pad and the base pad relative to each other can be performed by means of signals from the parking sensors. This speed can then suitably be decreased when the vehicle continuous towards the base pad and get closer to the base pad.

The predetermined initial alignment speed (AS) can be in the interval 0<AS<5 km/h, preferably 0.3<AS<3 km/h, and more preferably 0.5<AS<1.5 km/h.

According to one embodiment of the method, the speed of the vehicle is controlled to a predetermined initial final alignment speed when the WPT system provides a signal indicating that the vehicle pad and the base pad are electromagnetically coupled to each other such that alignment of the vehicle pad and the base pad relative to each other can be performed based on signals from the WPT system. Hereby, the final alignment can be started and the speed can be automatically adapted to the remaining distance between the vehicle (vehicle pad) and the base pad for facilitating the alignment operation. Particularly, the final alignment can be started before said one or more parking sensors may no longer be able to detect the base pad.

By the predetermined initial final alignment speed is meant a speed used when the vehicle pad and the base pad are electromagnetically coupled to each other, for example as soon as this electromagnetic coupling is achieved, and alignment between the vehicle pad and the base pad relative to each other can be performed by means of signals from the WPT system. This speed can then suitably be decreased when the vehicle continuous towards the base pad and get closer to the base pad. Finally, the speed is controlled to zero when the alignment has been performed within an accepted tolerance.

The initial final alignment speed (FAS) can be in the interval 0<FAS<2 km/h, preferably 0.1<FAS<1 km/h, and more preferably 0.2<FAS<0.8 km/h.

According to a further embodiment, the speed of the vehicle is controlled to a predetermined initial start alignment speed when the vehicle approaches the base pad and the base pad has not been detected by said one or more parking sensors. Hereby, the alignment can be started and the speed can be automatically adapted for avoiding a too abrupt slowdown when the predetermined initial alignment speed is introduced later on.

By the predetermined initial start alignment speed is meant a speed used when the vehicle (vehicle pad) reaches a start position at a certain distance from the base pad. This speed can then suitably be decreased when the vehicle continuous towards the base pad and get closer to the base pad.

The predetermined initial start alignment speed (SAS) can be in the interval 1<SAS<20 km/h, preferably 2<SAS<15 km/h, and more preferably 3<SAS<10 km/h.

According to a further embodiment, the speed of the vehicle is controlled by means of an adaptive cruise control (ACC) system of the vehicle. Hereby, both smooth braking and acceleration from various speeds are possible. This enables a cost efficient solution since a minimum of additional hardware is required if the vehicle is already provided with the ACC system.

According to a further embodiment, the base pad is detected by means of said one or more parking sensors being ultrasonic sensors. Hereby, a cost efficient solution for a long range alignment function used before the final alignment can be achieved.

Another aspect of the invention relates to a control unit for controlling a vehicle, when positioning a vehicle pad arranged on the vehicle, and a base pad of a wireless power transfer (WPT) system for charging vehicles, relative to each other, by driving the vehicle to the base pad, wherein the control unit is configured to receive signals from one or more parking sensors of the vehicle and control the speed of the vehicle to a predetermined initial alignment speed when receiving such a signal indicating that the base pad has been detected by said one or more parking sensors.

The advantages of the control unit are substantially the same as described for the method hereinabove.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
- Fig. 1: is a schematic view showing a charging station and a vehicle,
- Fig. 2: shows a vehicle approaching a charging station, and
- Fig. 3: shows equipment for performing a method according to the invention.

### DETAILED DESCRIPTION OF EXAMPLE EMBODIMENTS

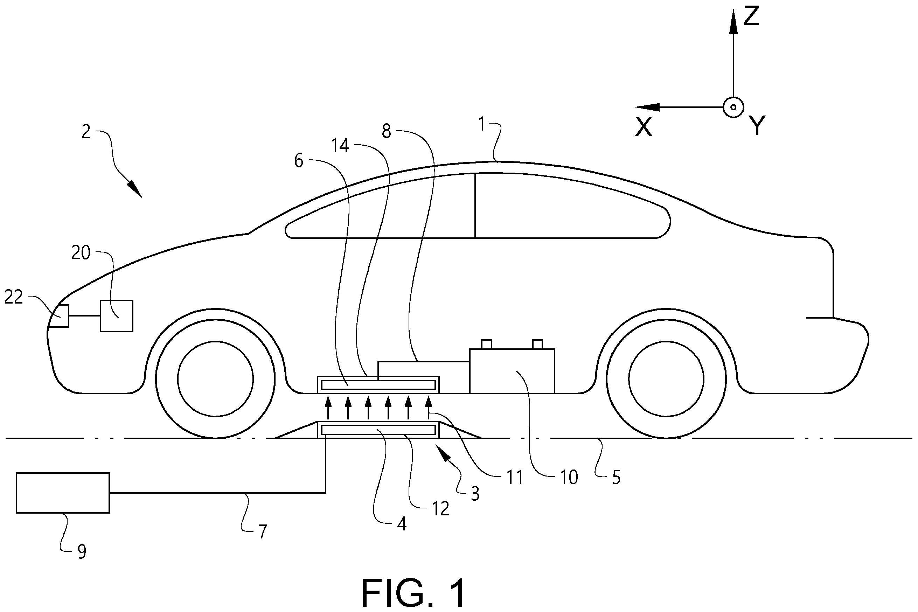

Fig. 1 shows a vehicle 1 positioned at a charging arrangement 2 for vehicles, such as a charging station, where a wireless power transfer (WPT) system 3 is used. The wireless power transfer system 3 includes a transmitter 4 arranged on the floor 5 and a receiver 6 arranged in the vehicle 1. Such a transmitter 4 is suitably arranged on or in the floor, or the ground, in a base pad 12. Further, the receiver 6 is suitably arranged on the underside of the vehicle 1 in a vehicle pad 14.

The transmitter 4 has a primary coil for generating an electromagnetic field and the receiver 6 has a secondary coil for interacting with the generated electromagnetic field for achieving power transfer from the primary coil to the secondary coil by electromagnetic induction. A power input 7 to the transmitter 4 can be wirelessly transferred from the transmitter 4 to the receiver 6 to achieve a power output 8 from the receiver 6. The wireless transfer of energy is schematically illustrated with arrows 11.

In the illustrated example, the transmitter 4 is powered by a power source 9 electrically connected to the transmitter 4. The power source and the power outlet thereof can be arranged at any suitable position, for example the power source can be arranged on a wall. The receiver 6 can be connected to any arrangement for storing and/or consumption of the energy transferred. In the illustrated example, the receiver 6 is electrically connected to a battery 10 arranged on the vehicle 1 for charging the battery 10. The vehicle 1 is positioned for arranging the transmitter 4 and the receiver 6 relative to each other such that energy can be transferred from the transmitter 4 to the receiver 6. The transmitter 4 and the receiver 6 are separated by a predetermined distance in the vertical direction. Further, the transmitter 4 and the receiver 6 are often at least partly overlapping each other when looked at in the vertical direction.

The complete receiver or transmitter may include other components as well, such as electric circuits and components. Further, the invention is not in any way limited to the car application. The device can be used in any vehicle or machine application, such as for example cars, busses, trucks, industrial trucks and automated guided vehicles, construction equipment and work machines, and trains.

When describing the invention, instead of referring to the transmitter and the receiver (and any associated components), reference will hereinafter be made to the base pad 12 and the vehicle pad 14 arranged on the vehicle, respectively.

Vehicles to be charged at the charging station 2 illustrated in Fig. 1, is suitably guided in a predetermined direction for alignment with the base pad. Thus, the vehicle will have a predetermined driving direction when approaching the charging position.

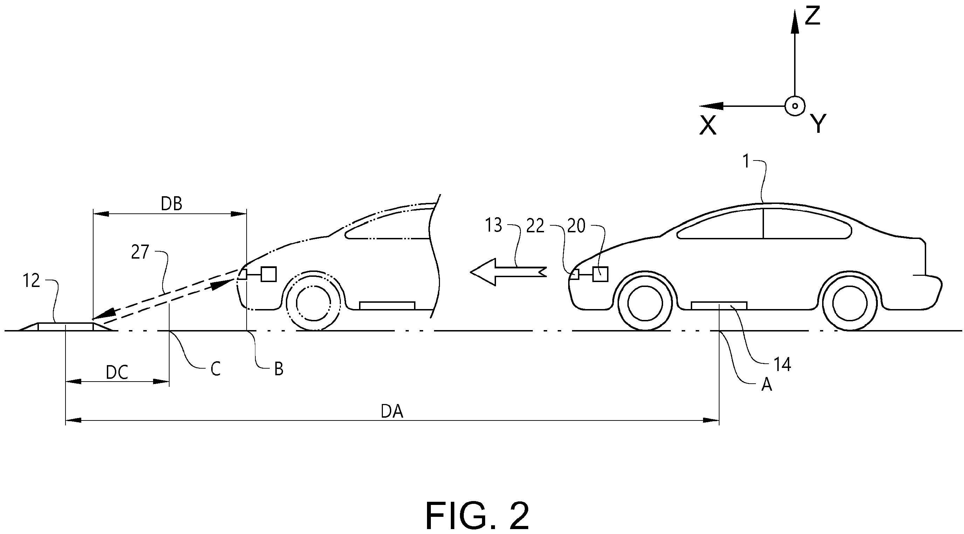

Fig. 2 shows how a vehicle 1 drives in an alignment direction 13 (in parallel to the X-direction in Figs. 1 and 2) on its way to a charging station comprising a base pad 12. In this example embodiment of a method for positioning a vehicle pad 14 arranged on a vehicle 1, and the base pad 12 of a wireless power transfer (WPT) system, relative to each other, by driving the vehicle to the base pad, the speed of the vehicle is controlled to a predetermined initial start alignment speed (SAS) at the position indicated by "A" in Fig. 2.

The position "A" of the vehicle pad 14 can be selected at a suitable distance "DA" from the base pad 12. For example, the distance "DA" between the position "A" and the base pad 12 can be in the interval 5-20 meter. The distance "DA" is measured from the centre of the vehicle pad 14 to the centre of the base pad 12. The identification of the vehicle at position "A" can be performed in various ways, such as by detecting the vehicle by a sensor, the vehicle being within Bluetooth range from the charging station, or by GPS or other suitable method, or the position "A" can be selected by a driver when the alignment operation is initiated. The speed of the vehicle is then suitably further decreased from the initial start alignment speed (SAS) when the vehicle continues from position "A" towards the base pad 12.

When the vehicle approaches the base pad 12, at a position "B" (closer to the base pad than position "A") in Fig. 2, the base pad 12 is detected by one or more parking sensors 22 of the vehicle, and when the base pad 12 has been detected, the speed of the vehicle is controlled to a predetermined initial alignment speed (AS).

The position "B" of the parking sensors 22 is dependent on the performance of the parking sensors 22 and the base pad 12. The equipment is however suitably designed and arranged for detecting the base pad 12 at a distance "DB" between the position "B" and the base pad in the interval 0.5-5 meters, preferably 0.75-4 meters, and more preferably 1-3 meters. The speed of the vehicle is then suitably further decreased from the initial alignment speed (AS) when the vehicle continues from position "B" towards the base pad 12. Input from the parking sensors 22 can then be used for controlling the alignment operation. The signal from the parking sensors are used to trigger the braking to a target speed. The force of the braking can be controlled by a PID algorithm for reaching the target speed in time. The distance "DB" is measured from the parking sensors 22 to the front edge of the base pad. (The distance between the parking sensors 22 and the vehicle pad 14 is typically approximately 1 meter.)

As the vehicle then approaches the base pad 12, at position "C" (closer to the base pad than position "B") in Fig. 2, the WPT system, for example the base pad 12 or the vehicle pad 14, provides a signal indicating that the vehicle pad 14 and the base pad 12 are electromagnetically coupled to each other such that alignment of the vehicle pad 14 and the base pad 12 relative to each other can be performed based on signals from the WPT system, and thereafter the speed of the vehicle 1 is controlled to a predetermined initial final alignment speed (FAS). Then, the parking sensors 22 are not used and instead the input for controlling the alignment operation is received from the WPT system. Such alignment in the X-direction (and the Y-direction) is not further described herein since such alignment is previously known by the skilled person.

The position "C" of the vehicle pad 14 is dependent on the performance of the base pad 12 and the vehicle pad 14. The equipment is often designed and arranged such that electromagnetic coupling between the vehicle pad 14 and the base pad 12 is established at a distance "DC" between the position "C" and the base pad 12 in the interval 0.1-1.5 meters, and often in the interval 0.3-0.7 meters. The distance "DC" is however preferably 0.5-1.2 meters, and more preferably 0.7-1.0 meters. The distance "DC" is measured from the centre of the vehicle pad 14 to the centre of the base pad 12.

The distance "DC", determined by the fact that the vehicle pad 14 and the base pad 12 are electromagnetically coupled to each other such that alignment of the vehicle pad 14 and the base pad 12 relative to each other can be performed based on signals from the WPT system, has often a length which means that the vehicle pad 14 and the base pad 12 are overlapping each other to some extent (when looking in the vertical direction).

The speed of the vehicle 1 is then further decreased from the initial final alignment speed (FAS) during the final alignment while the vehicle is continuing from position "C" to a final position (see Fig. 1) where the vehicle 1 is standing still ready for the charging operation to be started.

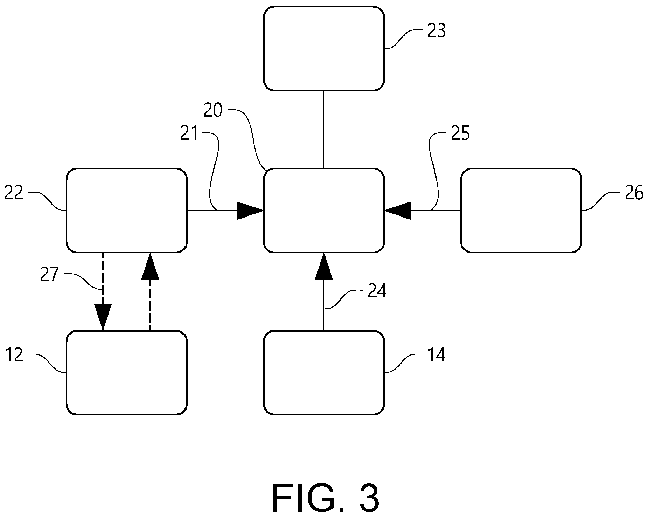

Fig. 3 is a block diagram showing equipment that can be used for performing the method according to the invention. A control unit 20 for controlling a vehicle 1, when positioning a vehicle pad 14 arranged on the vehicle, and a base pad 12 of a wireless power transfer (WPT) system for charging vehicles, relative to each other, by driving the vehicle 1 to the base pad 12, is schematically illustrated. The control unit 20 is configured to receive signals 21 from one or more parking sensors 22 of the vehicle and control the speed of the vehicle 1 to a predetermined initial alignment speed (AS) when receiving such a signal 21 indicating that the base pad 12 has been detected by said one or more parking sensors 22. The parking sensor 22 and the control unit 20 are also shown in Figs. 1 and 2.

The control unit 20 can be connected to or constitute a part of an adaptive cruise control (ACC) system 23 for controlling the speed of the vehicle. Said one or more parking sensors 22 arranged on the vehicle are connected (wirelessly or wired) to the control unit 20 for providing the signals 21 to the control unit 20. The control unit 20 can also receive signals 24 from the WPT system, such as from the base pad 12 or the vehicle pad 14. In addition, the control unit 20 can receive signals 25 from any other device 26 relevant to be used as input when controlling the vehicle.

With further reference to Figs. 2 and 3, at position "A", the control unit 20 receives a signal 25 from any suitable device 26 for initiating the alignment operation as previously described herein. When receiving such a signal 25, where the vehicle approaches the base pad 12 and the base pad has not been detected by said one or more parking sensors 22, the control unit 20 is configured to control the speed of the vehicle 1 to a predetermined initial start alignment speed (SAS).

At position "B", the control unit 20 receives signals 21 from said one or more parking sensors 22 indicating that the base pad 12 has been detected and the control unit 20 controls the speed of the vehicle 1 to the predetermined initial alignment speed (AS). The parking sensors 22 are suitably ultrasonic sensors interacting with the base pad 12 by sending out ultrasound 27 and detecting ultrasound reflected from the base pad 12.

At position "C", the control unit 20 receives a signal 24 from the WPT system, preferably from the base pad 12 or the vehicle pad 14, indicating that the vehicle pad 14 and the base pad 12 are electromagnetically coupled to each other such that alignment of the vehicle pad and the base pad relative to each other can be performed based on signals from the WPT system. Based on the signal 24, the control unit is configured to control the speed of the vehicle 1 to a predetermined initial final alignment speed (FAS).

It should be stressed that the driving of the vehicle and the control of the vehicle speed described herein are preferably performed by automatically controlling the vehicle by means of the control unit and any associated equipment, without any assistance from a driver of the vehicle. Such autonomous driving will facilitate the alignment for the charging operation.

The control unit 20 may comprise one or more microprocessors and/or one or more memory devices or any other components for communicating with remaining devices, and control the vehicle, and particularly for executing computer programs to perform the method described herein. Thus, the control unit is preferably provided with a computer program comprising program code means for performing the steps of any example embodiment of the method described hereinafter.

It is to be understood that the present invention is not limited to the embodiments described above and illustrated in the drawings; rather, the skilled person will recognize that many changes and modifications may be made within the scope of the appended claims.

## Claims

1. A method for positioning a vehicle pad (14) arranged on a vehicle (1), and a base pad (12) of a wireless power transfer (WPT) system for charging vehicles, relative to each other, by driving the vehicle (1) to the base pad (12), **characterized by** detecting the base pad (12) by one or more parking sensors (22) of the vehicle when the vehicle approaches the base pad, and, when the base pad has been detected, controlling the speed of the vehicle (1) to a predetermined initial alignment speed (AS).

2. A method according to claim 1, **characterized by** controlling the speed of the vehicle (1) to a predetermined initial final alignment speed (FAS) when the WPT system provides a signal indicating that the vehicle pad (14) and the base pad (12) are electromagnetically coupled to each other such that alignment of the vehicle pad and the base pad relative to each other can be performed based on signals from the WPT system.

3. A method according to claim 2, **characterized by** using the predetermined initial final alignment speed (FAS) being in the interval 0<FAS<2 km/h, preferably 0.1<FAS<1 km/h, and more preferably 0.2<FAS<0.8 km/h.

4. A method according to any preceding claim, **characterized by** controlling the speed of the vehicle (1) to a predetermined initial start alignment speed (SAS) when the vehicle approaches the base pad and the base pad has not been detected by said one or more parking sensors (22).

5. A method according to claim 4, **characterized by** using the predetermined initial start alignment speed (SAS) being in the interval 1<SAS<20 km/h, preferably 2<SAS<15 km/h, and more preferably 3<SAS<10 km/h.

6. A method according to any preceding claim, **characterized by** using the predetermined initial alignment speed (AS) being in the interval 0<AS<5 km/h, preferably 0.3<AS<3 km/h, and more preferably 0.5<AS<1.5 km/h.

7. A method according to any preceding claim, **characterized by** controlling the speed of the vehicle (1) by means of an adaptive cruise control (ACC) system of the vehicle.

8. A method according to any preceding claim, **characterized by** detecting the base pad (12) by means of said one or more parking sensors (22) being ultrasonic sensors.

9. A control unit (20) for controlling a vehicle (1), when positioning a vehicle pad (14) arranged on the vehicle, and a base pad (12) of a wireless power transfer (WPT) system for charging vehicles, relative to each other, by driving the vehicle (1) to the base pad (12), **characterized in that** the control unit (20) is configured to receive signals (21) from one or more parking sensors (22) of the vehicle and control the speed of the vehicle (1) to a predetermined initial alignment speed (AS) when receiving such a signal (21) indicating that the base pad (12) has been detected by said one or more parking sensors (22).

10. A control unit (20) according to claim 9, **characterized in that** the control unit is configured to control the speed of the vehicle (1) to a predetermined initial final alignment speed (FAS) when receiving a signal (24) from the WPT system indicating that the vehicle pad (14) and the base pad (12) are electromagnetically coupled to each other such that alignment of the vehicle pad and the base pad relative to each other can be performed based on signals from the WPT system.

11. A control unit according to claim 9 or 10, **characterized in that** the control unit (20) is configured to control the speed of the vehicle (1) to a predetermined initial start alignment speed (SAS) when the vehicle approaches the base pad (12) and the base pad has not been detected by said one or more parking sensors (22).

12. A control unit according to any of claims 9-11, **characterized in that** the control unit (20) is configured to control the speed of the vehicle (1) by means of an adaptive cruise control (ACC) system of the vehicle.

13. A control unit according to any of claims 9-12, **characterized in that** the control unit (20) is configured to receive signals (21) from said one or more parking sensors (22) being ultrasonic sensors.

14. A vehicle (1) comprising a control unit (20) according to any of claims 9-13.

15. A computer program comprising program code means for performing a method according to any of claims 1-8.
